# EUROPEAN PATENT SPECIFICATION

(11) **EP 4 172 013 B1**
(45) Date of publication and mention of the grant of the patent: **28.02.2024**
(21) Application number: 20735131.3
(22) Date of filing: 24.06.2020
(51) Int. Cl.: B60T 17/02, F04C 25/02

(54) **MOTOR VEHICLE VACUUM PUMP**
KRAFTFAHRZEUG-VAKUUMPUMPE
POMPE À VIDE DE VÉHICULE AUTOMOBILE

(43) Date of publication of application: 03.05.2023
(73) Proprietor: Pierburg Pump Technology GmbH, 41460 Neuss (DE)
(72) Inventor: PIOTROWSKI, Marcel, 41460 Neuss (DE); AL-HASAN, Nabil Salim, 41460 Neuss (DE); RUSS, Stanislaus, 41460 Neuss (DE); SCHULZ, Christian, 41460 Neuss (DE); GRÜNE, Tobias, 41460 Neuss (DE); STEPANOW, Michael, 41460 Neuss (DE)
(74) Representative: terpatent Patentanwälte und European Patent Attorneys ter Smitten Eberlein -Van Hoof
(86) International application number: PCT/EP2020/067664
(87) International publication number: WO 2021/259462

(56) References cited:
- WO-A1-2017/028839
- KR-A- 20160 091 201

## Description

The present invention is directed to a motor vehicle vacuum pump, in particular to an electric rotary vane vacuum pump for providing vacuum to a motor vehicle brake booster.

Electric vacuum pumps are driven by an electric motor and are typically used in motor vehicles for providing vacuum to a brake booster of a motor vehicle braking system, in particular for providing vacuum to a vacuum chamber of the brake booster. The electric vacuum pump can be the only vacuum source for the brake booster, or can be used in combination with other vacuum sources as for example an intake system of an internal combustion engine.

The brake booster utilizes the pressure difference between its vacuum chamber pressure and the surrounding atmospheric pressure to enhance a mechanic brake force which is generated by pressing the brake pedal of the motor vehicle and which mechanically actuates the motor vehicle braking system. Providing the brake booster vacuum chamber with an adequate vacuum is therefore crucial to ensure a reliable operation of the brake booster and, as a result, to ensure a reliable and convenient operation of the motor vehicle braking system.

Modern motor vehicle electric vacuum pumps are provided with an electronically commutated electric motor which is free of mechanically abrading brush contacts and which allows an electronical control of its rotational motor speed. This provides a relatively durable and efficient motor vehicle vacuum pump.

Such a motor vehicle vacuum pump is, for example, disclosed in WO 2017/028839 A1. The vacuum pump comprises a pumping unit with a rotatable pump rotor, and an electronically commutated electric motor for driving the pump rotor. The vacuum pump also comprises a pump control unit which provides closed-loop control of a rotational motor speed of the electric motor and therefore ensures a constant rotational motor speed even in case of load and/or supply voltage fluctuations.

Because of safety requirements, the motor vehicle vacuum pump must be designed to achieve a sufficient vacuum in the brake booster vacuum chamber even in critical motor vehicle driving situations with repetitive brake pedal actuations and thus with a high vacuum demand. The motor vehicle vacuum pump of WO 2017/028839 A1 therefore has to be designed to always provide a relatively high pump performance. This typically requires relatively expensive pump components/materials which causes a high-priced motor vehicle vacuum pump.

KR 2016 0091201 A discloses an electrical-type vacuum pump for forming vacuum pressure for a braking system in vehicle, with a motor for delivering power to a rotor, and a control unit for increasing revolutions per minute of the rotor.

An object of the present invention is therefore to provide a reliable and cost-efficient motor vehicle vacuum pump.

This object is achieved with a motor vehicle vacuum pump with the features of claim 1.

The motor vehicle vacuum pump according to the present invention is provided with a pumping unit with a rotatable pump rotor. Preferably, the vacuum pump is a vane pump wherein the pump rotor comprises a rotor body which is eccentrically arranged in a substantially cylindrical pumping chamber and which comprises several radially slidable rotor vanes. During pump operation, the rotor vanes are in touching radial contact with a pumping chamber sidewall and define several rotating pumping-chamber compartments whose volume varies within one pump rotor revolution.

The motor vehicle vacuum pump according to the present invention is also provided with an electronically commutated electric motor for driving the pump rotor. The electronically commutated electric motor allows to electronically control a rotational motor speed of the electric motor. Typically, the electronically commutated electric motor is energized with a pulse-width-modulated drive energy, wherein an effective electrical drive power and thereby the rotational motor speed is controlled by controlling a duty cycle of the pulse width modulation. Typically, the electric motor comprises an electromagnetic motor stator with at least one stator coil, and comprises a permanent-magnetic motor rotor which is co-rotatably connected with the pump rotor.

The motor vehicle vacuum pump according to the present invention is also provided with a pressure sensor connector for periodically receiving a pressure parameter provided by a motor vehicle pressure sensor. Preferably, the vacuum pump is provided with a vehicle-data-bus connector which is configured to provide a data communication with other motor vehicle units via a vehicle data bus system, e.g. via a motor vehicle CAN bus system. In this case, the pressure parameter is typically received via the vehicle data bus system meaning that the pressure sensor connector is defined by the vehicle-data-bus connector. Alternatively, the vacuum pump can be provided with a separate pressure sensor connector for providing a direct electrical connection to the motor vehicle pressure sensor. The pressure parameter can be periodically received via an analog pressure signal whose present amplitude and/or frequency indicates the present pressure parameter, or can be received via a digital signal periodically transmitting a digitally encoded pressure parameter. Generally, the pressure parameter can be received via any kind of signal allowing a periodical parameter transmission.

Typically, the pressure parameter indicates a present negative pressure or, in other words, a present difference pressure of a vacuum chamber of a motor vehicle brake booster relative to a present atmospheric pressure. In this case, a higher pressure parameter indicates a lower absolute vacuum chamber pressure. However, the pressure parameter can also indicate the absolute vacuum chamber pressure. In terms of the present invention, a higher (positive) pressure parameter always indicates a higher vacuum and thus a lower absolute vacuum chamber pressure, and a lower (positive) pressure parameter always indicates a higher vacuum and thus a lower absolute vacuum chamber pressure.

The motor vehicle vacuum pump according to the present invention is also provided with a pump control unit which is configured to control the variable rotational motor speed of the electric motor. Preferably, the pump control unit is configured to provide a closed-loop control of the variable rotational motor speed, i.e. the pump control unit is configured to continuously adapt a motor drive power based on a motor-speed feedback signal to realize a desired set motor speed.

According to the present invention, the pump control unit comprises a standard-operation control module which is configured to control the variable rotational motor during normal pump operation, i.e. in normal, non-critical vehicle driving situations. The standard-operation control module is configured to control the variable rotational motor speed within a standard-operation speed range. The standard-operation speed range typically comprises motor speed values in the range of 3000 revolutions per minute (RPM) to 4000 RPM. The standard-operation control module is in particular configured to determine a present motor speed value which is within the standard-operation speed range and to set the variable rotational motor speed corresponding to the determined present motor speed value. Preferably, the standard-operation control module is configured to determine a wear-optimized and/or efficiency-optimized present motor speed value. This provides a reliable, efficient and low-wear operation of the motor vehicle vacuum pump in normal, non-critical situations and thus during most time of pump life.

According to the present invention, the pump control unit also comprises a boost-drive control module for temporarily providing a boosted pump performance in non-normal, potentially critical situations. The boost-drive control module is superordinate to the standard-operation control module, meaning that the boost-drive control module is configured to overrule the standard-operation control module if the boost-drive control module is triggered. The boost-drive control module is configured to temporarily set the variable rotational motor speed corresponding to a boost speed value which is higher than the standard-operation speed range. This allows to temporarily provide the boosted pump performance if required, e.g. in case of an excessive vacuum demand caused by repetitive brake pedal actuations in critical motor vehicle driving situations. According to the invention, the boost speed value is significantly higher than the standard-operation speed range and causes an excessive rotational motor speed which, in principle, is "harmful" for the vacuum pump, so that the vacuum pump could be damaged if being always operated at this excessive boost motor speed. The boost speed value is typically at least 10 % higher than the maximum standard-operation speed value of the standard-operation speed band and preferably equal to or higher than 4500 RPM.

According to the present invention, the pump control unit also comprises a safety control module which is configured to monitor the pressure parameter and to trigger the boost-drive control module based on the pressure parameter. The safety control module is in particular configured to detect/anticipate an excessive vacuum demand based on the pressure parameter. The safety control module can be configured to evaluate only the present pressure parameter or can be configured to evaluate a (time) sequence of pressure parameters, e.g. to determine a pressure change rate. The safety control module is configured to trigger the boost-drive control module in case of an excessive vacuum demand so that the vacuum pump temporarily provides the boosted pump performance in this case for handling the excessive vacuum demand. The safety control module is thus configured to trigger the boost-drive control module (only) in non-normal, potentially critical situations and in particular not during normal pump operation.

The boost-drive control module according to the present invention allows to drive the electric motor with an excessive, in principle harmful, boost motor speed for a relatively short, non-harmful duration. This allows to temporarily provide a boosted pump performance in the relatively rare case of an excessive vacuum demand, in particular in critical motor vehicle driving situations. The motor vehicle vacuum pump according to the present invention therefore does not have to be designed for always providing the boosted pump performance, but can generally be designed for the relatively low rotational motor speeds of the standard-operation speed range. This provides a reliable and also cost-efficient motor vehicle vacuum pump.

If the brake booster vacuum chamber negative/difference pressure drops below a minimum-working-pressure threshold, the brake booster cannot sufficiently enhance the brake force anymore. This causes a "non-smooth", hard-to-actuate brake pedal which impairs the vehicle driver's comfort and can even cause an insufficient braking force in critical motor vehicle driving situations. In a preferred embodiment of the present invention, the safety control module is therefore configured to trigger the boost-drive control module if the pressure parameter is lower than a defined minimum-working-pressure threshold for providing the boosted pump efficiency in this case. This ensures that the vacuum chamber is rapidly provided with a sufficient vacuum chamber negative/difference pressure again. This ensures a reliable function of the motor vehicle brake booster and thus provides a reliable motor vehicle vacuum pump. The minimum-working-pressure threshold is typically determined experimentally and is specific to different motor vehicle braking systems. Typically, the minimum-working-pressure threshold is defined in the range of 250 mbar to 350 mbar (negative pressure).

Motor vehicle vacuum pumps are typically not continuously active (pumping) but are designed for a temporal, on-demand operation. The pump control unit is therefore preferably configured to switch off the electric motor if the pressure parameter is equal to or higher than a deactivation pressure threshold and to switch on the electric motor if the pressure parameter is lower than an activation pressure threshold. The deactivation pressure threshold is generally defined in that way that the vacuum chamber negative/difference pressure is sufficient for a plurality of brake booster operations at the time when the vacuum pump is switched off. The activation pressure threshold is generally defined in that way that, at least under normal conditions, the vacuum pump is switched on before the vacuum chamber negative/difference pressure reaches an insufficient pressure level. The minimum-working-pressure threshold is therefore preferably defined lower than the activation pressure threshold so that the pressure parameter does not drop below the minimum-working-pressure threshold in normal situations but only in non-normal, potentially critical situations with an excessive vacuum demand. This ensures that the motor vehicle vacuum pump is operated at the, in principle, "harmful" boost motor speed only in non-normal situations and thus relatively rarely. This provides a reliable and durable motor vehicle vacuum pump. Typically, the deactivation pressure threshold is in the range of 700 mbar to 800 mbar and the activation pressure threshold is in the range of 450 mbar to 550 mbar (negative pressure). Typically, the boost-drive control module is configured to drive the electric motor at the boost motor speed until the pressure parameter reaches/exceeds the deactivation pressure threshold, i.e. until the electric motor is switched off by the pump control unit.

Typically, a maximum standard-operation motor speed during normal operation is only 80 % of a maximum achievable rotational motor speed of the motor vehicle vacuum pump. This allows providing different boost motor speed levels. In a preferred embodiment of the present invention, the safety control module is therefore configured to define the boost speed value based on the pressure parameter. The safety control module is preferably provided with a boost-speed map with at least two pressure dependent boost speed values. The safety control module can, for example, be configured to define a moderate boost speed value if the pressure parameter is between the minimum-working-pressure threshold and a maximum-boost-pressure threshold, and to define a maximum boost speed value if the pressure parameter is below the maximum-boost-pressure threshold. This provides a graduated, demand-based control of the boost motor speed and thus allows to minimize the pump wear caused by the excessive boost motor speed. All boost speed values are typically at least 10 % higher than the maximum standard-operation speed value of the standard-operation speed band and preferably equal to or higher than 4500 RPM.

Preferably, the motor vehicle vacuum pump is provided with a vehicle-data-bus connector for receiving at least one vehicle parameter via a vehicle data bus system, wherein the safety control module is configured to trigger the boost-drive control module based on the at least one vehicle parameter and/or to define the boost speed value based on the at least one vehicle parameter. The at least one vehicle parameter can either be read out by the pump control unit from a vehicle unit/system which is connected to the vehicle data bus system, or, alternatively, can be written to a vehicle parameter storage of the control unit by a vehicle unit/system which is connected to the vehicle data bus system. The at least one vehicle parameter can, for example, indicate a present motor vehicle velocity, a present motor vehicle acceleration, a present motor vehicle inclination, a status of a vehicle emergency brake system, etc. Generally, the vehicle parameter can be any parameter provided by a vehicle control unit, a vehicle sensor system, or any other vehicle unit/system which is (directly or indirectly) connected to the vehicle data bus system. The vehicle parameter allows to detect/anticipate situations with a high vacuum demand, e.g. a high-velocity driving increases the risk of relatively long-lasting braking processes, uphill/downhill driving potentially causes repetitive brake pedal actuations, etc. This allows an accurate and also predictive adaption of the boost-drive functionality for different vehicle situations and thus provides a reliable, efficient and durable motor vehicle vacuum pump. The at least one vehicle parameter can also directly indicate an external boost-drive request. In this case, the safety control module is configured to always (pressure-independently) trigger the boost-drive control module if an external boost-drive request is received. This allows an external triggering of the boost-drive control module via the vehicle data bus, e.g. by a vehicle control unit, and thus provides a versatile motor vehicle vacuum pump.

In a preferred embodiment of the present invention, one vehicle parameter indicates a motor vehicle velocity. The safety control module can, for example, be configured to define a trigger pressure threshold based on the motor vehicle velocity. Because driving noise is relatively low during low-velocity driving, the safety control module can, in particular, be configured to define a relatively low trigger pressure threshold in case of a relatively low motor vehicle velocity to avoid annoying noise generated by the boost motor speed as much as possible in this case. The safety control module can also be configured to define a relatively low boost speed value in case of a relatively low motor vehicle velocity to minimize the noise generated by the vacuum pump if operated at the boost motor speed. This provides a reliable and also relatively low-noise motor vehicle vacuum pump. The safety control module can also be configured to pressure-independently trigger the boost-drive control if relatively high vehicle velocity is detected to ensure a defined target-pressure in the vacuum chamber. This ensures a correct function of the brake booster in case of high-velocity driving and thus provides a motor vehicle vacuum pump which improves the vehicle driving safety.

Preferably, one vehicle parameter indicates an emergency-braking-system status, wherein the safety control module is configured to always and immediately trigger the boost-drive control module in case of an emergency braking. This provides the maximum pump performance in case of an emergency braking and thus as much as possible ensures a correct function of the motor vehicle brake booster and thus of the motor vehicle braking system in this case. This provides a motor vehicle vacuum pump which improves the vehicle driving safety.

An embodiment of the present invention is described with reference to the enclosed drawings, wherein
figure 1 shows a schematic illustration of a part of a motor vehicle braking system with a motor vehicle brake booster and with a motor vehicle vacuum pump according to the present invention, and
figure 2 shows a schematic illustration of a correlation between a present pressure parameter and a present rotational motor speed of the motor vehicle vacuum pump of figure 1.

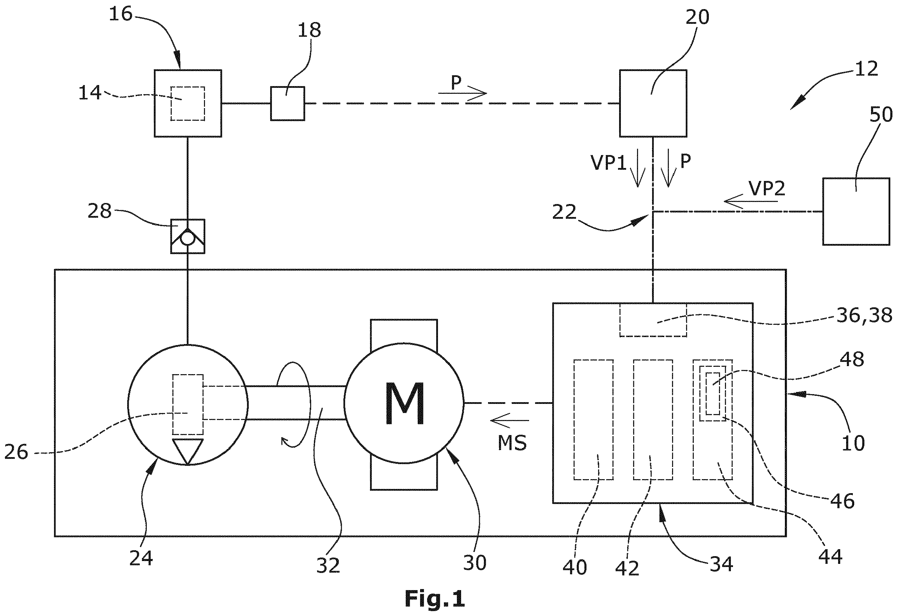

Fig. 1 shows a motor vehicle vacuum pump 10 which is used in a motor vehicle braking system 12 for providing a vacuum to a vacuum chamber 14 of a motor vehicle brake booster 16.

The motor vehicle braking system 12 also comprises a motor vehicle pressure sensor 18 which is fluidically connected to the vacuum chamber 14 and which is configured to measure a vacuum chamber difference pressure relative to atmospheric pressure. The motor vehicle pressure sensor 18 is furthermore configured to provide a pressure parameter P, which indicates the measured vacuum chamber difference pressure, to a motor vehicle control unit 20. The motor vehicle control unit 20 is connected to a vehicle data bus system 22 which is configured to allow a data communication between connected motor vehicle units.

The motor vehicle vacuum pump 10 comprises a pumping unit 24 with a rotatable pump rotor 26. In the present embodiment, the motor vehicle vacuum pump 10 is a rotary vane pump wherein the pump rotor 26 comprises a plurality of rotor vanes which are configured to be radially slidable and to rotate within a substantially cylindrical pumping chamber. The pumping unit 24 is fluidically connected to the vacuum chamber 14 of the motor vehicle brake booster 16 via a check valve 28. The pumping unit 24 is configured to evacuate the vacuum chamber 14.

The motor vehicle vacuum pump 10 also comprises an electronically commutated electric motor 30 which is configured to drive the pump rotor 26 via a rotor shaft 32 which is co-rotatably connected with the pump rotor 26. The electric motor 30 is configure to be operated with a variable rotational motor speed.

The motor vehicle vacuum pump 10 also comprises a pump control unit 34 which is configured to provide a closed-loop control of the variable rotational motor speed of the electric motor 30. The pump control unit 34 is connected to the vehicle data bus system 22 via a vehicle-data-bus connector 36 which is configured to allow a data communication via the vehicle data bus system 22.

In the present embodiment, the pump control unit 34 is configured to periodically read out the pressure parameter P from the motor vehicle control unit 20 via the vehicle data bus system 22. The vehicle-data-bus connector 36 thus defines a pressure sensor connector 38 which is configured to receive the pressure parameter P provided by the motor vehicle pressure sensor 18. In an alternative embodiment, the pump control unit 34 can be directly electrically connected to the motor vehicle pressure sensor 18 via a separate pressure sensor connector.

The pump control unit 34 is configured to control a present rotational motor speed MS of the electric motor 30 based on the pressure parameter P. The pump control unit 34 is in particular configured to switch on the electric motor 30 (MS > 0) if the pressure parameter P is below an activation pressure threshold PA, and is configured to switch off the electric motor 30 (MS = 0) if the pressure parameter P is equal to or higher than a deactivation pressure threshold PD. In the present embodiment, the activation pressure threshold PA is 500 mbar and the deactivation pressure threshold PD is 750 mbar.

According to the present invention, the pump control unit 34 comprises a standard-operation control module 40 which is configured to actively control the variable rotational motor speed MS during normal pump operation, i.e. the standard-operation control module 40 is always active if the electric motor 30 is on. The standard-operation control module 40 is configured to determine an efficiency-optimized and wear-optimized present standard-operation speed value SS out of a standard-operation speed range SSR. In the present embodiment, the standard-operation speed range comprises speed values in the range of 3000 RPM to 4000 RPM.

According to the present invention, the pump control unit 34 also comprises a boost-drive control module 42 which is configured to overrule the standard-operation control module 40 if being triggered and to temporarily set the present rotational motor speed MS corresponding to a present boost speed value BSn with which the boost-drive control module 42 is triggered. In the present embodiment, the boost-drive control module is configured to keep the present rotational motor speed MS corresponding to the present boost speed value BSn until the electric motor 30 is switched off by the pump control unit 34 at the time when the pressure parameter P reaches/exceeds the deactivation pressure threshold PD.

According to the present invention, the pump control unit 34 also comprises a safety control module 44 which is configured to trigger the boost-drive control module 42. In the present embodiment, the safety control module 44 comprises a boost-speed map storage 46 which stores a boost-speed control map 48 with two boost speed values BS1,BS2 and to respective boost pressure thresholds BP1,BP2. In the present embodiment, the first boost speed value BS1 is 4500 RPM and the respective first boost pressure threshold BP1 is 300 mbar. The second boost speed value BS2 is 5000 RPM and the respective second boost pressure threshold BP2 is 200 mbar. Both boost speed values BS1,BS2 thus are significantly higher than the standard-operation speed range SSR, and both boost pressure thresholds BP1,BP2 are lower than the activation pressure threshold PA.

The safety control module 44 is configured to monitor the pressure parameter P and trigger the boost-drive control module 42 based on the pressure parameter P. The safety control module 44 is in particular configured to trigger the boost-drive control module 42 with the first boost speed value BS1 if the pressure parameter P is between the first boost pressure threshold BP1 and the second boost pressure threshold BP2. The safety control module 44 is furthermore configured to trigger the boost-drive control module 42 with the second boost speed value BS2 if the pressure parameter P is below the second boost pressure threshold BP2.

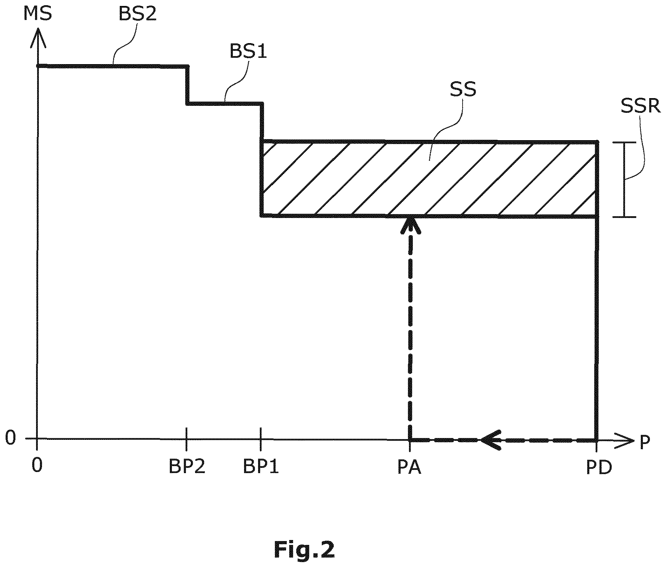

Fig. 2 schematically illustrates the respective present rotational motor speed MS being set by the pump control unit 34 according to the present invention based on the pressure parameter P.

The present rotational motor speed MS is set corresponding to the second boost speed value BS2 if the pressure parameter P is below the second boost pressure threshold BP2. The present rotational motor speed MS is set corresponding to the first boost speed value BS1 if the pressure parameter P is between the two boost pressure thresholds BP1,BP2. The present rotational motor speed MS is set corresponding to a present standard-operation speed value SS out the standard-operation speed range SSR if the pressure parameter P is between the first boost pressure threshold BP1 and the deactivation pressure threshold PD. The electric motor 30 is switched off (MS = 0) if the pressure parameter P is equal to or higher than the deactivation pressure threshold PD.

In the present embodiment, the safety control module 44 is also configured to periodically read out a first vehicle parameter VP1 from the motor vehicle control unit 20 via the vehicle data bus system 22, wherein the first vehicle parameter VP1 indicates a present motor vehicle velocity. The safety control module 44 is configured to monitor the first vehicle parameter VP1 and to adapt the purely pressure-based trigger-routine described before based on the first vehicle parameter VP1.

The safety control module 44 is in particular configured to trigger the boost-drive control module 42 already with the second boost speed value BS2 if the pressure parameter is below the first boost pressure threshold BP1 in case that the first vehicle parameter VP1 indicates a motor vehicle velocity which is higher than a relatively high braking-critical velocity threshold. The safety control module 44 is furthermore configured to only trigger the boost-drive control module 42 if the pressure parameter P is below the second boost pressure threshold BP1 (and not if the pressure parameter P is between both boost pressure thresholds BP1,BP2) in case that the first vehicle parameter VP1 indicates a motor vehicle velocity which is lower than a relatively low noise-critical velocity threshold.

In the present embodiment, the safety control module 44 is also configured to periodically read out a second vehicle parameter VP2 from an emergency-braking-system control unit 50 via the vehicle data bus system 22, wherein the second vehicle parameter VP2 indicates a present emergency-braking-system status. The safety control module 44 is configured to monitor the second vehicle parameter VP2 and to always and immediately (independent of the pressure parameter P) trigger the boost-drive control module 42 with the second boost speed value BS2 in case that the second vehicle parameter VP2 indicates an emergency braking.

### Reference List

- 10: motor vehicle vacuum pump
- 12: motor vehicle braking system
- 14: vacuum chamber
- 16: motor vehicle brake booster
- 18: motor vehicle pressure sensor
- 20: motor vehicle control unit
- 22: vehicle data bus system
- 24: pumping unit
- 26: pump rotor
- 28: check valve
- 30: electronically commutated electric motor
- 32: rotor shaft
- 34: pump control unit
- 36: vehicle-data-bus connector
- 38: pressure sensor connector
- 40: standard-operation control module
- 42: boost-drive control module
- 44: safety control module
- 46: boost-speed map storage
- 48: boost-speed control map
- 50: emergency-braking-system control unit

- BP1,BP2: boost pressure thresholds
- BS1,BS2: boost speed values
- BSn: present boost speed value
- MS: present rotational motor speed
- P: pressure parameter
- PA: activation pressure threshold
- PD: deactivation pressure threshold
- SS: present standard-operation speed value
- SSR: standard-operation speed range
- VP1,VP2: vehicle parameters

## Claims

1. A motor vehicle vacuum pump (10), comprising
- a pumping unit (24) with a rotatable pump rotor (26),
- an electronically commutated electric motor (30) for driving the pump rotor (26),
- a pressure sensor connector (38) for periodically receiving a pressure parameter (P) provided by a motor vehicle pressure sensor (18), and
- a pump control unit (34) for controlling a variable rotational motor speed (MS) of the electric motor (30), **characterised in that** the pump control unit (34) comprises
- a standard-operation control module (40) which is configured to control the variable rotational motor speed (MS) within a standard-operation speed range (SSR),
- a boost-drive control module (42) which is configured to overrule the standard-operation control module (40) if being triggered and to set the variable rotational motor speed (MS) corresponding to a boost speed value (BS1,BS2,BSn) which is higher than the standard-operation speed range (SSR),
- a safety control module (44) which is configured to monitor the pressure parameter (P) and to trigger the boost-drive control module (42) based on the pressure parameter (P).

2. The motor vehicle vacuum pump (10) according to claim 1, wherein the safety control module (44) is configured to trigger the boost-drive control module (42) if the pressure parameter (P) is lower than a defined minimum-working-pressure threshold (BP1,BP2).

3. The motor vehicle vacuum pump (10) according to claim 2, wherein the pump control unit (34) is configured to switch off the electric motor (30) if the pressure parameter (P) is equal to or higher than a deactivation pressure threshold (PD) and to switch on the electric motor (30) if the pressure parameter (P) is lower than an activation pressure threshold (PA), and wherein the minimum-working-pressure threshold (BP1,BP2) is lower than the activation pressure threshold (PA).

4. The motor vehicle vacuum pump (10) according to one of the preceding claims, wherein the safety control module (44) is configured to define the boost speed value (BS1,BS2,BSn) based on the pressure parameter (P).

5. The motor vehicle vacuum pump (10) according one of the preceding claims, wherein a vehicle-data-bus connector (36) is provided for receiving at least one vehicle parameter (VP1,VP2) via a vehicle data bus system (22), and wherein the safety control module (44) is configured to trigger the boost-drive control module (42) based on the at least one vehicle parameter (VP1,VP2) and/or to define the boost speed value (BS1,BS2,BSn) based on the at least one vehicle parameter (VP1,VP2).

6. The motor vehicle vacuum pump (10) according to claim 5, wherein one vehicle parameter (VP1) indicates a motor vehicle velocity.

7. The motor vehicle vacuum pump (10) according to claim 5 or 6, wherein one vehicle parameter (VP2) indicates an emergency-braking-system status, and wherein the safety control module (44) is configured to always trigger the boost-drive control module (42) in case of an emergency braking.

## Patentansprüche

1. Kraftfahrzeugvakuumpumpe (10), umfassend
- eine Pumpeinheit (24) mit einem drehbaren Pumpenrotor (26),
- einen elektronisch kommutierten Elektromotor (30) zum Antreiben des Pumpenrotors (26),
- einen Drucksensoranschluss (38) zum periodischen Empfangen eines von einem Kraftfahrzeugdrucksensor (18) bereitgestellten Druckparameters (P), und
- eine Pumpensteuereinheit (34) zum Steuern einer variablen Motordrehzahl (MS) des Elektromotors (30), **dadurch gekennzeichnet, dass**
die Pumpensteuereinheit (34) umfasst
- ein Standardbetriebssteuermodul (40), das eingerichtet ist, die variable Motordrehzahl (MS) innerhalb eines Standardbetriebsdrehzahlbereichs (SSR) zu steuern,
- ein Verstärkungsantriebssteuermodul (42), das eingerichtet ist, das Standardbetriebssteuermodul (40) zu übersteuern, wenn es angesteuert wird, und die variable Motordrehzahl (MS) gemäß eines Verstärkungsdrehzahlwerts (BS1, BS2, BSn) einzustellen, der höher als der Standardbetriebsdrehzahlbereich (SSR) ist,
- ein Sicherheitssteuermodul (44), das eingerichtet ist, den Druckparameter (P) zu überwachen und das Verstärkungsantriebssteuermodul (42) basierend auf dem Druckparameter (P) anzusteuern.

2. Kraftfahrzeugvakuumpumpe (10) nach Anspruch 1, wobei das Sicherheitssteuermodul (44) eingerichtet ist, das Verstärkungsantriebssteuermodul (42) anzusteuern, wenn der Druckparameter (P) niedriger ist als eine definierte Mindestarbeitsdruckschwelle (BP1, BP2).

3. Kraftfahrzeugvakuumpumpe (10) nach Anspruch 2, wobei die Pumpensteuereinheit (34) eingerichtet ist, den Elektromotor (30) abzuschalten, wenn der Druckparameter (P) gleich oder größer als eine Deaktivierungsdruckschwelle (PD) ist, und den Elektromotor (30) einzuschalten, wenn der Druckparameter (P) kleiner als eine Aktivierungsdruckschwelle (PA) ist, und wobei die Mindestarbeitsdruckschwelle (BP1, BP2) kleiner als die Aktivierungsdruckschwelle (PA) ist.

4. Kraftfahrzeugvakuumpumpe (10) nach einem der vorhergehenden Ansprüche, wobei das Sicherheitssteuermodul (44) eingerichtet ist, den Verstärkungsdrehzahlwert (BS1, BS2, BSn) basierend auf dem Druckparameter (P) festzulegen.

5. Kraftfahrzeugvakuumpumpe (10) nach einem der vorhergehenden Ansprüche, wobei ein Fahrzeugdatenbusanschluss (36) zum Empfangen mindestens eines Fahrzeugparameters (VP1, VP2) über ein Fahrzeugdatenbussystem (22) vorhanden ist, und wobei das Sicherheitssteuermodul (44) eingerichtet ist, das Verstärkungsantriebssteuermodul (42) basierend auf dem mindestens einen Fahrzeugparameter (VP1, VP2) anzusteuern und/oder den Verstärkungsdrehzahlwert (BS1, BS2, BSn) basierend auf dem mindestens einen Fahrzeugparameter (VP1, VP2) festzulegen.

6. Kraftfahrzeugvakuumpumpe (10) nach Anspruch 5, wobei ein Fahrzeugparameter (VP1) eine Kraftfahrzeuggeschwindigkeit angibt.

7. Kraftfahrzeugvakuumpumpe (10) nach Anspruch 5 oder 6, wobei ein Fahrzeugparameter (VP2) einen Notbremsungssystemzustand angibt, und wobei das Sicherheitssteuermodul (44) eingerichtet ist, das Verstärkungsantriebssteuermodul (42) stets im Falle einer Notbremsung auszulösen.

## Revendications

1. Une pompe à vide de véhicule moteur (10), qui comprend
- une unité de pompage (24) avec un rotor de pompe rotatif (26),
- un moteur électrique à commutation électronique (30) pour entraîner le rotor de la pompe (26),
- un connecteur de capteur de pression (38) pour recevoir périodiquement un paramètre de pression (P) fourni par un capteur de pression du véhicule moteur (18), et
- une unité de contrôle de la pompe (34) pour contrôler une vitesse de rotation moteur (MS) variable du moteur électrique (30), **caractérisée en ce que**
l'unité de contrôle de la pompe (34) comprend
- un module de contrôle de fonctionnement standard (40) qui est configuré pour contrôler la vitesse rotative moteur variable (MS) dans une zone de vitesse de fonctionnement standard (SSR),
- un module de contrôle de boost (42) configuré pour passer outre le module de contrôle de fonctionnement standard (40) en cas de déclenchement et pour établir la vitesse du moteur rotatif variable (MS) correspondant à une valeur de vitesse de boost (BS1,BS2,BSn) supérieure à la zone de vitesse de fonctionnement standard (SSR),
- un module de contrôle de sécurité (44) configuré pour surveiller le paramètre de pression (P) et pour déclencher le module de contrôle de la commande de boost (42) en fonction du paramètre de pression (P).

2. La pompe à vide de véhicule moteur (10) selon la revendication 1, dans laquelle le module de contrôle de sécurité (44) est configuré pour déclencher le module de contrôle de boost (42) si le paramètre de pression (P) est inférieur à un seuil de pression minimale de fonctionnement défini (BP1,BP2).

3. La pompe à vide de véhicule moteur (10) selon la revendication 2, dans laquelle l'unité de contrôle de pompe (34) est configurée pour désactiver le moteur électrique (30) si le paramètre de pression (P) est égal ou supérieur à un seuil de pression de désactivation (PD) et pour activer le moteur électrique (30) si le paramètre de pression (P) est inférieur à un seuil de pression d'activation (PA), et dans laquelle le seuil de pression minimale de fonctionnement (BP1,BP2) est inférieur au seuil de pression d'activation (PA).

4. La pompe à vide de véhicule moteur (10) selon l'une des revendications précédentes, dans laquelle le module de contrôle de sécurité (44) est configuré pour définir la valeur de vitesse de boost (BS1,BS2,BSn) en fonction du paramètre de pression (P).

5. La pompe à vide de véhicule moteur (10) selon l'une des revendications précédentes, dans laquelle un connecteur de bus de données de véhicule (36) est prévu pour recevoir au moins un paramètre de véhicule (VP1,VP2) via un système de bus de données de véhicule (22), et dans laquelle le module de commande de sécurité (44) est configuré pour trigger le module de commande de boost (42) sur la base du au moins un paramètre de véhicule (VP1,VP2) et/ou pour définir la valeur de vitesse de boost (BS1,BS2,BSn) sur la base du au moins un paramètre de véhicule (VP1,VP2).

6. La pompe à vide de véhicule moteur (10) selon la revendication 5, dans laquelle un paramètre véhicule (VP1) indique une vitesse du véhicule moteur.

7. La pompe à vide de véhicule moteur (10) selon la revendication 5 ou 6, dans laquelle un paramètre de véhicule (VP2) indique un état de système de freinage d'urgence, et dans laquelle le module de contrôle de sécurité (44) est configuré pour tout le temps trigger le module de contrôle de véhicule à moteur (42) en cas de freinage d'urgence.
